# FASCICULE DE BREVET EUROPEEN

(11) **EP 0 574 637 B1**
(45) Date de publication et mention de la délivrance du brevet: **09.04.1997**
(21) Numéro de dépôt: 92401718.9
(22) Date de dépôt: 19.06.1992
(51) Int. Cl.: G05B 19/40, G05B 19/425

(54) **Procédé pour commander un organe déplaçable d'une unité fonctionnelle, et unité fonctionnelle pour sa mise en oeuvre**
Verfahren zur Steuerung eines mobilen Teils einer Betriebseinrichtung und Betriebseinrichtung zu dieser Realisierung
Method for the control of a movable part of an operating unit and operating unit for its realisation

(43) Date de publication de la demande: 22.12.1993
(73) Titulaire: EURO CP s.a.r.l., F-94045 Créteil Cédex (FR)
(72) Inventeur: Gilbert, Jérôme, F-92300 Levallois Perret (FR)
(74) Mandataire: Pontet, Bernard

(56) Documents cités:
- EP-A- 0 021 968
- DE-A- 4 013 583
- DE-A- 4 112 048
- FR-A- 2 373 819
- FR-A- 2 627 916
- US-A- 4 764 881

## Description

La présente invention concerne un procédé pour actionner l'organe déplaçable d'une unité fonctionnelle, par exemple dans un local d'habitation ou de travail.

L'invention concerne aussi une unité fonctionnelle et une installation pour la mise en oeuvre du procédé.

L'invention est applicable à tous types d'appareils et mouvements, en particulier commandes de vantaux, vannes, volets roulants etc. On commande habituellement les volets roulants à actionnement électrique avec deux boutons, un pour chaque sens de mouvement.

On maintient l'un d'eux enfoncés jusqu'à ce que l'on constate visuellement que la position souhaitée pour le volet est atteinte. On pourrait songer à équiper l'organe déplaçable, c'est à dire dans l'exemple le volet roulant, ou bien encore l'actionneur, par exemple un moteur électrique, avec un système de codage de position qui permettrait de commander le volet roulant en affichant une consigne de position, à la suite de quoi le volet roulant serait actionné jusqu'à ce que le système de codage de position indique que la position souhaitée est atteinte. Mais cela serait coûteux.

Le EP-A-0 021 968 décrit une commande par moteur pas à pas encore plus sophistiquée, par l'intermédiaire d'une courroie crantée 18, en vue d'une commande de grande précision. L'étalonnage du système est rendu nécessaire pour tenir compte des très petites erreurs pouvant être introduites par les tolérances sur le pas des crans de la courroie crantée. Pour cela, l'organe mobile (chariot) est déplacé d'une extrémité de course à l'autre et le nombre des pas nécessaires pour cette course totale est relevé. Ensuite, les positionnements précis sont effectués en prenant en compte le nombre de pas correspondant à la course totale.

On connaît encore d'après le FR-A-2 627 916 et le DE-A-41 12 048 des procédés qui transcrivent une consigne de position en une durée d'actionnement selon une règle préétablie qui nécessite que le dispositif de commande soit dès sa fabrication adapté à une unité fonctionnelle bien déterminée, telle qu'un rétroviseur d'automobile ou une colonne de direction à réglage motorisé. Par exemple, pour deux rétroviseurs ou colonnes de direction dont la partie mobile serait de poids ou de configuration différente, le temps d'actionnement à prévoir pour un même déplacement pourrait être différent. Des travaux de conception et d'adaptation sont nécessaires préalablement à la fabrication pour faire correspondre les consignes de position que va donner l'utilisateur avec les durées d'actionnement appropriées pour que l'actionneur réalise ces consignes.

Et malgré cela, le facteur de proportionnalité prévu en usine ne sera pas correct pour les appareils dont les paramètres de fonctionnement mécanique (frottements etc) n'ont pas la valeur nominale.

Le but de la présente invention est de proposer un procédé pour commander une unité fonctionnelle qui soit simple à concevoir et à mettre au point, conduise à une fabrication peu coûteuse, et permette la mise en oeuvre avec une unité fonctionnelle dont les caractéristiques mécaniques ne sont pas ou mal connues à l'avance.

Suivant le premier aspect de l'invention, le procédé pour commander dans une unité fonctionnelle un organe déplaçable entre deux extrémités de course au moyen d'un actionneur, comprenant les étapes de :
- élaboration (13, 15) d'un ordre de déplacement ;
- activation de l'actionneur pendant une durée de manoeuvre calculée d'après l'ordre reçu ;
est caractérisé par les étapes suivantes, préalables à l'élaboration de l'ordre :
- activation de l'actionneur pour déplacer l'organe mobile d'une extrémité de course à l'autre ;
- mesure de la durée totale de déplacement entre extrémités de course ;
- enregistrement de cette durée totale dans une mémoire non volatile ;
et en ce que le calcul de ladite durée de manoeuvre prend en compte ladite durée totale.

Suivant le deuxième aspect de l'invention, l'unité fonctionnelle comprenant un organe déplaçable entre deux extrémités de course, un actionneur relié à l'organe déplaçable, et un micro-contrôleur relié à une mémoire non volatile et à une horloge, et programmé pour interpréter un ordre de manoeuvre en termes de durée d'activation de l'actionneur et pour commander l'activation de l'actionneur pendant ladite durée de manoeuvre, est caractérisée en ce que le micro-contrôleur est programmé pour, au cours d'une étape d'initialisation, prendre en compte une opération réelle de déplacement de l'organe mobile d'une extrémité de course à l'autre pour mesurer et enregistrer dans la mémoire non volatile la durée totale de déplacement entre les extrémités de course, puis, lorsqu'un ordre de manoeuvre est reçu, déterminer ladite durée de manoeuvre en prenant en compte ladite durée totale.

Suivant le troisième aspect de l'invention, l'installation comprend en combinaison une unité fonctionnelle selon le deuxième aspect, et une unité de commande permettant d'élaborer des ordres quantifiés, et des moyens de liaison entre l'unité fonctionnelle et l'unité de commande.

L'invention est basée sur l'hypothèse que le déplacement de l'organe mobile obéit à une loi bien établie en fonction du temps, par exemple une loi de proportionnalité. Pour effectuer un déplacement partiel, on active l'actionneur pendant une fraction correspondante de la durée nécessaire pour effectuer le déplacement complet d'une extrémité à l'autre de la course de l'organe déplaçable. Si la loi de correspondance entre le déplacement et le temps est plus complexe qu'une simple loi de proportionnalité, le calcul tient compte par exemple de la position estimée de départ, du sens de variation et du temps écoulé depuis le début du mouvement. L'invention évite le recours coûteux à un dispositif de mesure de position tout en s'adaptant aux paramètres de fonctionnement de l'unité fonctionnelle à commander.

Le système peut être réinitialisé automatiquement de façon périodique ou manuellement par l'opérateur, pour tenir compte de l'évolution des durées de manoeuvre, d'une part, et du cumul d'erreurs successives dues à l'hypothèse de déplacement proportionnel au temps, d'autre part.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un schéma-bloc du volet roulant en tant qu'unité fonctionnelle selon l'invention ; et
- la figure 3 est un organigramme de traitement de la commande quantifiée selon l'invention.

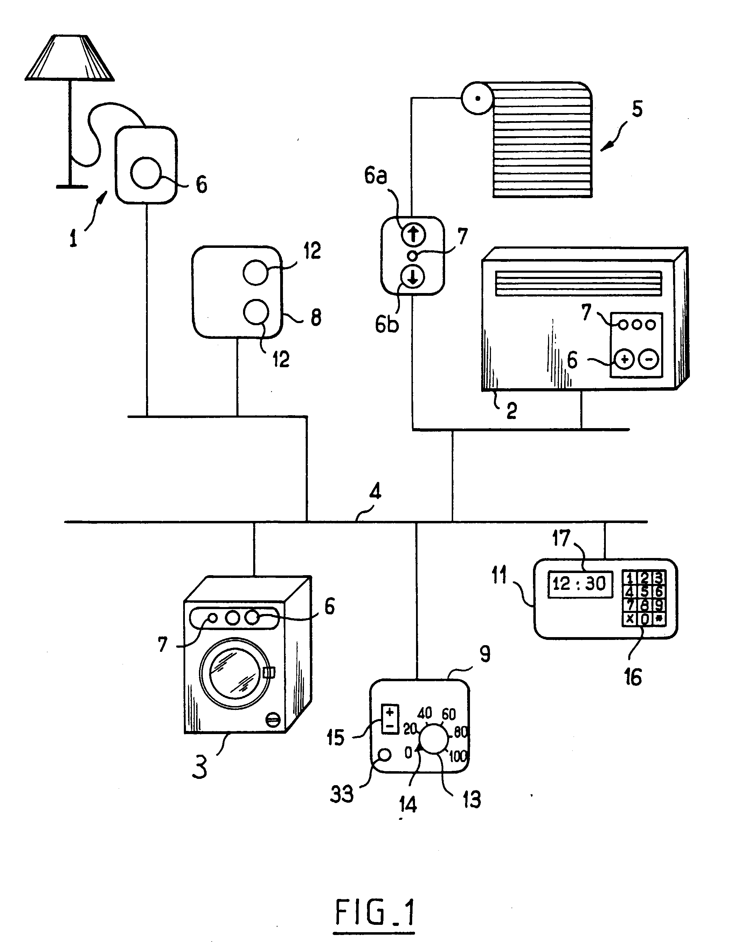

Dans l'exemple représenté à la figure 1, l'installation, volontairement simplifiée, comprend divers appareils d'action, à savoir un lampadaire 1, un convecteur de chauffage 2, une machine à laver 3 et un volet roulant motorisé 5 qui sont reliés les uns aux autres par un espace de communication bidirectionnelle 4 à travers lequel ils peuvent échanger des messages d'état provenant des appareils d'action 1, 2, 3, 5 et des messages de commande destinés aux appareils d'action 1, 2, 3, 5. Les appareils d'action comprennent un ou plusieurs boutons de réglage 6 offrant au minimum deux états de fonctionnement, par exemple "marche" et "arrêt", et le cas échéant un ou plusieurs voyants lumineux ou autres indicateurs 7. Le volet roulant 5 comprend deux boutons de commande locale 6a et 6b pour la montée et la descente respectivement. Chaque bouton provoque le mouvement du moteur dans le sens correspondant lorsqu'il est enfoncé et l'arrêt du moteur dès qu'il est relâché.

L'espace 4 peut-être constitué par le réseau d'alimentation électrique, auquel cas les messages sont élaborés de manière concrète selon la technique des courants porteurs. L'espace 4 peut également être constitué par un espace perméable aux ondes radio ou aux signaux infra-rouges, ou encore par des moyens filaires.

Trois appareils de commande 8, 9, 11 sont également reliés à l'espace 4 pour recevoir les messages d'état de la part des appareils d'action 1, 2, 3, 5 et leur adresser des messages de commande et des messages de demande d'état.

L'appareil de commande 8 est du type manuel . Il comprend deux boutons de télécommande 12 permettant de commander par exemple l'un le lampadaire 1 et l'autre la machine à laver 3.

L'appareil de commande 11 est un programmateur horaire comprenant un clavier de programmation 16, et une horloge 17.

Le boîtier de commande 9 est d'un type permettant une télécommande quantifiée grâce à un bouton rotatif réglable 13 dont un index 14 est mobile devant une échelle graduée de "0" à "100". Un basculeur 15 permet de spécifier le signe algébrique de la grandeur désignée par l'index 14 du bouton 13. Le basculeur 15 est normalement en position neutre mais peut être basculé dans un sens ou dans l'autre en fonction du signe algébrique que l'opérateur veut désigner.

Le boîtier de commande 9 est utilisable pour commander le volet roulant 5 en lui envoyant un message indicatif de la grandeur désignée par l'index 14 et le cas échéant du signe désigné par le basculeur 15. Un message n'est envoyé que si le réglage du bouton 14 est modifié.

Un message sans indication de signe est indicatif d'une consigne de position Xp exprimée en pourcentage de fermeture du volet roulant. Un message avec indication de signe est indicatif d'un ordre de variation de la position du volet roulant dans un sens ou dans l'autre en fonction du signe, la grandeur désignée par le bouton rotatif 13 indiquant le pourcentage de variation de la position du volet par rapport à sa course totale.

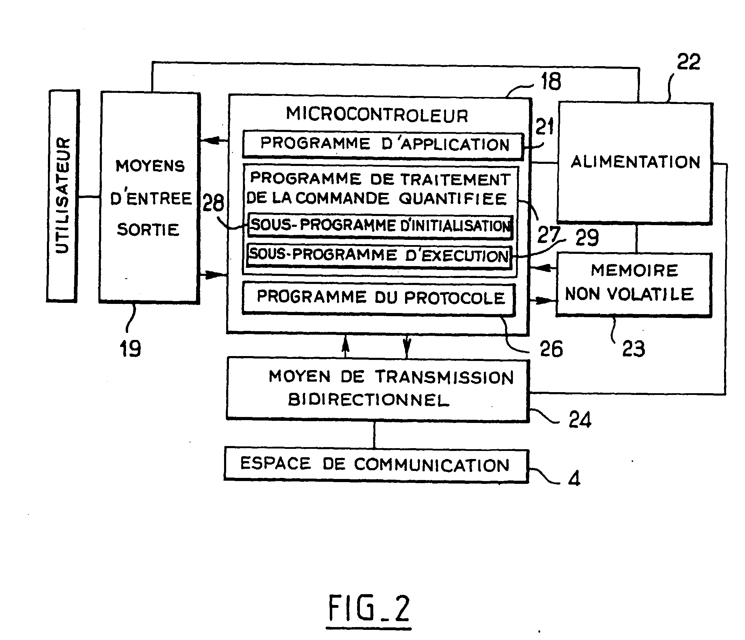

Comme représenté à la figure 2, le volet roulant 5 comporte un micro-contrôleur 18 relié à des moyens d'entrée/sortie 19 qui font l'interface avec l'utilisateur. En pratique, ces moyens d'entrée/sortie sont constitués par les boutons 6a, 6b et voyant lumineux 7 du volet roulant, et aussi par l'actionneur (moteur électrique) qui fournit à l'utilisateur l'action attendue, à savoir montée ou descente du volet.

En fonction des commandes effectuées sur les boutons 6a et 6b, et le cas échéant des signaux reçus de capteurs, un programme d'application 21 prévu dans le micro-contrôleur gère l'action du voyant lumineux 7 et de l'actionneur, faisant partie des moyens d'entrée/sortie. Le micro-contrôleur 18 est en outre relié à une alimentation 22 et à une mémoire non-volatile 23. Le micro-contrôleur 18 est aussi relié à l'espace 4 par l'intermédiaire d'un moyen de transmission bidirectionnelle 24, par exemple un modem capable de transformer en messages du type courants porteurs les informations reçues du micro-contrôleur 18, et inversement de transformer en signaux acceptables par le micro-contrôleur 18 les messages du type courants porteurs provenant de l'espace 4.

Le micro-contrôleur 18 renferme encore un programme de traitement de la commande quantifiée 27, comprenant un sous-programme d'initialisation 28, et un sous-programme d'exécution 29.

Il est aussi prévu dans le micro-contrôleur 18 un programme de protocole 26 qui gère les échanges d'informations entre le moyen de transmission bidirectionnelle, les moyens d'entrée/sortie et la mémoire non-volatile.

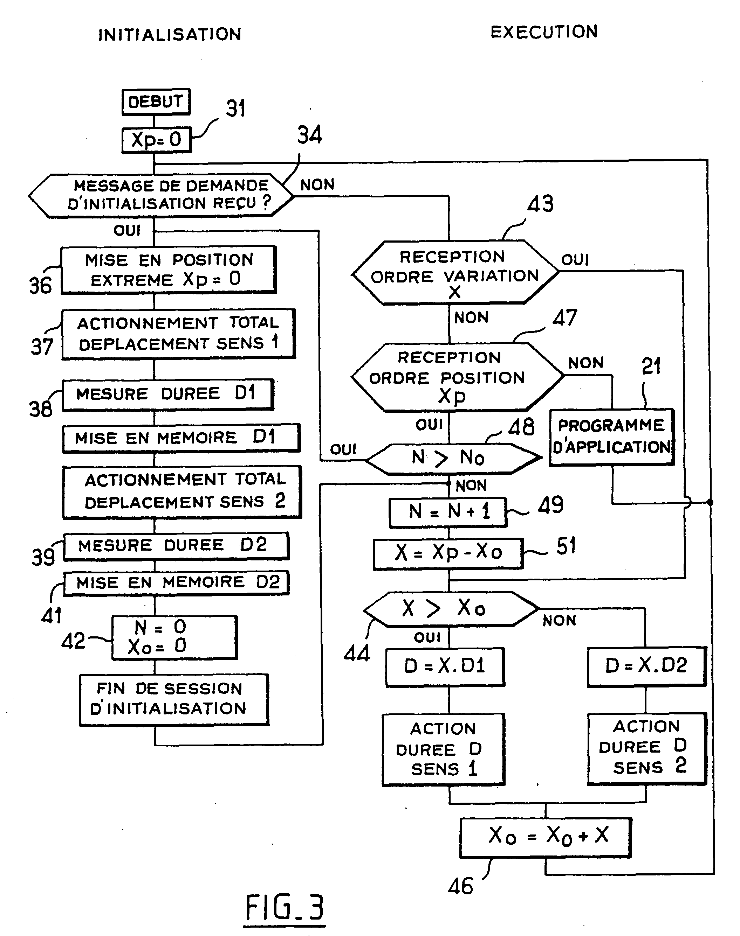

On va maintenant décrire le procédé selon l'invention en référence à la figure 3 qui représente l'organigramme du programme de traitement de la commande quantifiée.

Au début, le programme comprend une étape 31 par laquelle le paramètre Xp représentant la consigne de position, est mis égal à 0 % de fermeture, c'est à dire ouverture complète du volet.

A ce stade, il est nécessaire que l'opérateur actionne un bouton 33 prévu sur l'appareil de commande 9 (figure 1) pour provoquer l'initialisation que l'on va maitenant décrire.

L'actionnement du bouton d'initialisation 33 peut également provoquer d'autres opérations automatiques qui ne font pas l'objet de la présente invention, notamment la mise en correspondance de l'appareil 9 avec le volet roulant 5, et la recherche automatique d'adresses pour l'appareil de commande 9, le volet roulant 5, ainsi qu'éventuellement d'autres unités fonctionnelles de l'installation.

Revenant à la figure 3, le programme comporte un test 34 qui détecte l'actionnement du bouton d'initialisation 33 ou, de manière plus générale, la réception d'un message émis à un certain stade du processus qui a été déclenché par l'actionnement du bouton 33.

Si le test 34 détecte ce message, la mise en position extrême d'ouverture totale est confirmée (étape 36). Pour cela, le volet roulant est actionné pendant une durée suffisante vers la position extrême pour qu'on soit sûr que celle-ci est atteinte. Ensuite, le volet roulant est actionné sur toute la longueur de sa course à partir de la position "0 % de fermeture" (étape 37) et la durée de ce déplacement est mesurée grâce à une horloge intérieure du micro-contrôleur 18 (étape 38). La durée totale D1 ainsi mesurée est mise en mémoire dans la mémoire non-volatile 23 (figure 2) puis le volet roulant est actionné sur toute sa course dans l'autre sens de déplacement pour revenir à la position "0% de fermeture". La durée totale D2 du déplacement dans l'autre sens est à son tour mesurée (étape 39) et mise en mémoire (étape 41).

La session d'initialisation se termine par une étape 42 consistant à rendre égale à 0 % la position courante estimée Xo du volet et à rendre égal à zéro un paramètre N indicatif du nombre d'ordres de position Xp exécutés.

Pour plus de clarté, on ne décrira que plus loin comment le sous-programme d'initialisation qui vient d'être décrit se raccorde au programme d'exécution que l'on va maintenant décrire.

On va donc maintenant supposer que la réponse au test 34 était négative et que l'initialisation est déjà faite c'est à dire que la mémoire non-volatile contient déjà les durées D1 et D2.

Dans un premier temps, on recherche par un test 43 si il y a réception d'un ordre de variation de position en provenance de l'appareil de commande 9, c'est-à-dire un ordre indicatif d'une position du bouton 13 et d'un signe exprimé par actionnement du basculeur 15 de la figure 1.

Si la réponse est positive, on recherche le signe de cet ordre (test 44).

Selon le signe, le moteur est commandé dans le sens S1 ou respectivement dans le sens S2. La grandeur X est interprétée comme un pourcentage à appliquer à la durée totale D1 ou D2 dans le sens S1 ou S2 désigné par le signe, et par conséquent le moteur est actionné pendant une durée D correspondant à ce pourcentage.

Ensuite, étape 46, on actualise la position courante Xo du volet.

Si au contraire la réponse au test 43 est négative, on recherche par le test 47 s'il y a réception d'un ordre sans indication de signe, c'est à dire d'un ordre de position Xp, signifiant que l'utilisateur souhaite que le volet roulant prenne la position Xp.

Si oui, on vérifie (test 48) si le nombre d'exécutions d'ordres de position Xp ne dépasse pas un nombre prédéterminé No. Dans la négative on passe directement à une étape 49 par laquelle on incrémente de 1 la valeur de N.

Si au contraire on détecte que le nombre N est supérieur à la valeur prédéterminée No, on se rend à l'étape 36 "mise en position extrême" au début du programme d'initialisation pour effectuer complètement le programme d'initialisation, de manière d'une part à mettre à jour les durées D1 et D2 enregistrées dans la mémoire non-volatile, et d'autre part placer le volet roulant dans une position connue avec certitude, à savoir la position 0 %.

On se rend ensuite à l'étape d'incrémentation de la valeur de N, entre-temps remise à zéro par l'étape 42.

On calcule ensuite le pourcentage X qu'il faudra appliquer à la durée totale d'actionnement D1 ou D2 selon le sens de la manoeuvre, pour réaliser l'ordre de position Xp (étape 51).

On effectue ensuite les mêmes étapes que celles effectuées juste après le test 43 de réception d'un ordre de variation lorsque la réponse à ce test était positive. On a en effet calculé grâce à l'étape 51 une valeur X qui est de même nature que celle qui aurait pu être reçue en tant qu'ordre de variation X et les deux traitements peuvent donc être à ce stade les mêmes.

On est ensuite, après l'étape 46 d'actualisation de la valeur courante estimée Xo du volet roulant, renvoyé à l'entrée du test 34 pour détecter les demandes d'initialisation.

Revenant maintenant à la première intialisation au début de la description de la figure 3, comme on avait par l'étape 31 introduit une consigne de position artificielle Xp = 0, puis vers la fin du programme d'intialisation une valeur courante Xo = 0, le raccordement du programme d'initialisation juste en amont de l'étape 51 selon laquelle le pourcentage de mouvement X est égal à Xp moins Xo, donne une valeur X égale zéro ne produisant aucun déplacement du volet roulant.

Si la réponse au test 47 pour détecter la réception d'un ordre de position Xp est négative, il y a exécution du programme d'application 21 gérant notamment les commandes locales 6a et 6b de la figure 1.

Au cours du programme d'intialisation, on peut mesurer les durées D1 et D2 par différents moyens.

Le début de la durée est donné par l'instant d'activation de l'actionneur.

La fin de la durée peut être détectée d'après la variation d'un paramètre de fonctionnement de l'actionneur, par exemple une surintensité quand l'actionneur est bloqué par l'arrivée en butée du volet roulant. On peut également détecter le signal d'un détecteur de position de proximité, mécanique, optique ou magnétique ou encore inductif.

Bien entendu, l'invention n'est pas limitée aux exemples décrits et représentés.

On pourrait prévoir qu'on n'enregistre la durée de déplacement que dans un seul sens et que la durée dans l'autre sens est considérée comme étant la même.

Pour enregistrer la durée de déplacement, plutôt que d'effectuer une commande automatique sur toute la course dans le programme d'initialisation, on pourrait prévoir que le programme d'initialisation attend l'action manuelle de l'opérateur sur l'un des boutons 6a ou 6b. La durée de déplacement peut alors être calculée ou mesurée comme exposé dans le cadre du processus automatique, mais en variante ou peut également prendre comme instant de fin de la course totale l'instant ou l'opérateur lâche le bouton 6a ou 6b qu'il a actionné.

En ce qui concerne la mise à jour automatique, celle-ci pourrait être purement et simplement supprimée, ou encore, en variante intermédiaire on pourrait simplement remettre à jour la position estimée en provoquant, lorsqu'il y a eu No exécutions d'ordres de position, un passage par la position extrême 0 %, suivi d'une course effectuée pendant un pourcentage de temps égal à Xp par rapport à la durée totale enregistrée.

On pourrait encore prévoir que le programme de traitement des commandes quantifiées n'accepte que l'un ou l'autre des deux types d'ordre, à savoir l'ordre de variation à partir de la position courante ou l'ordre de position Xp.

Le programmateur horaire 11 peut-être programmé, grâce à son clavier, pour envoyer des commandes de positionnement prédéterminées à des horaires également prédéterminés.

## Revendications

1. Procédé de commande, dans une unité fonctionnelle, d'un organe déplaçable entre deux extrémités de course au moyen d'un actionneur, comprenant les étapes de :
- élaboration (13, 15) d'un ordre de déplacement;
- activation de l'actionneur pendant une durée de manoeuvre calculée d'après l'ordre reçu ;
caractérisé par les étapes suivantes, préalables à l'élaboration de l'ordre :
- activation (37) de l'actionneur pour déplacer l'organe mobile d'une extrémité de course à l'autre ;
- mesure de la durée totale (D1, D2) de déplacement entre extrémités de course ;
- enregistrement (41) de cette durée totale dans une mémoire non volatile (23) ;
et en ce que le calcul de ladite durée de manoeuvre prend en compte ladite durée totale.

2. Procédé selon la revendication 1, caractérisé en ce que pour mesurer la durée totale de déplacement(D1, D2), on détecte la fin du déplacement d'après la variation d'un paramètre de fonctionnement de l'actionneur.

3. Procédé selon la revendication 1, caractérisé en ce que pour mesurer la durée totale de déplacement (D1, D2), on détecte la fin du déplacement au moyen d'une détection de position.

4. Procédé selon la revendication 1, caractérisé en ce qu'on prend comme étant la durée de déplacement la durée entre une action manuelle de mise en marche de l'actionneur et une action manuelle de mise à l'arrêt de l'actionneur.

5. Procédé selon la revendication 1, caractérisé en ce qu'après un certain nombre (No) d'activations de l'actionneur d'après des ordres de déplacement on effectue à nouveau la mesure de la durée totale (D1, D2) et l'enregistrement de cette durée totale à la place de la durée totale précédemment enregistrée, dans un but de mise à jour.

6. Procédé selon l'une des revendications 1 à 5, caractérisé en ce que l'ordre est significatif d'un actionnement partiel à partir d'une position de l'organe déplaçable telle qu'elle résulte des déplacements précédents.

7. Procédé selon l'une des revendications 1 à 5, caractérisé par les étapes suivantes :
- mise en mémoire d'une position estimée (Xo) de l'organe déplaçable à l'issue de chaque activation de l'actionneur d'après un ordre reçu ;
- élaboration de l'ordre de déplacement sous la forme d'une consigne (Xp) de position de l'organe déplaçable ;
- calcul du pourcentage (X) qu'il faut appliquer à la course totale pour passer de la position estimée (Xo) à la position (Xp) correspondant à la consigne ;
- activation de l'actionneur pendant une durée de manoeuvre calculée par application dudit pourcentage (X) à la durée totale (D1, D2) mise en mémoire.

8. Procédé selon la revendication 7, caractérisé en ce qu'après un certain nombre de manoeuvres, un ordre de déplacement sous forme de consigne (Xp) de position est suivi par les étapes suivantes :
- mouvement de l'organe déplaçable jusqu'à une position extrême de réinitialisation, choisie parmi les deux positions extrêmes ;
- activation de l'actionneur pendant une durée de manoeuvre correspondant à la durée totale (D1, D2) mise en mémoire, à laquelle on applique le pourcentage (X) correspondant au déplacement partiel entre ladite position extrême de réinitialisation et la position de consigne (Xp) ; et
- mise en mémoire de la position de consigne (Xp) en tant que position estimée (Xo).

9. Procédé selon l'une des revendications 1 à 5, caractérisé par les étapes suivantes :
- élaboration de l'ordre sous la forme d'une consigne de position (Xp) ; et
- activation de l'actionneur pour ramener l'organe mobile à une position extrême, puis dans l'autre sens pendant une durée de manoeuvre correspondant à la durée totale (D1, D2) mise en mémoire, à laquelle on applique le pourcentage correspondant au déplacement partiel entre ladite position extrême et la position de consigne.

10. Procédé selon l'une des revendications 7 à 9, caractérisé en ce que l'opérateur choisit entre l'élaboration d'un ordre sous la forme d'une consigne de position (Xp) et l'élaboration d'un ordre d'actionnement partiel exprimé en pourcentage (X) ou analogue à partir de la position de l'organe déplaçable telle qu'elle résulte des déplacements précédents, et en ce que l'ordre d'actionnement partiel conduit à une activation pendant une durée partielle (D) calculée par application dudit pourcentage ou analogue (X) à la durée totale (D1, D2) mise en mémoire.

11. Unité fonctionnelle (5) comprenant un organe déplaçable entre deux extrémités de course, un actionneur relié à l'organe déplaçable, et un micro-contrôleur (18) relié à une mémoire non volatile (23) et à une horloge, et programmé pour interpréter un ordre de manoeuvre en termes de durée d'activation de l'actionneur et pour commander l'activation de l'actionneur pendant ladite durée de manoeuvre, caractérisée en ce que le micro-contrôleur est programmé pour, au cours d'une étape d'initialisation, prendre en compte une opération réelle de déplacement de l'organe mobile d'une extrémité de course à l'autre pour mesurer et enregistrer dans la mémoire non volatile (23) la durée totale (D1, D2) de déplacement entre les extrémités de course, puis, lorsqu'un ordre de manoeuvre est reçu, déterminer ladite durée de manoeuvre en prenant en compte ladite durée totale.

12. Unité fonctionnelle selon la revendication 11, caractérisée en ce qu'elle comprend des moyens pour détecter la fin du déplacement de l'organe mobile d'après la variation d'un paramètre de fonctionnement de l'actionneur, dans le cadre de la mesure de ladite durée totale (D1, D2).

13. Unité fonctionnelle selon la revendication 11, caractérisée en ce qu'elle comprend des moyens détecteurs de positionnement pour détecter la fin du déplacement de l'organe mobile, dans le cadre de la mesure de ladite durée totale (D1, D2).

14. Unité fonctionnelle selon la revendication 11, caractérisée en ce que le micro-contrôleur est programmé pour mesurer, comme étant ladite durée totale (D1, D2), le temps écoulé entre une action manuelle de mise en marche et une action manuelle de mise à l'arrêt de l'actionneur.

15. Unité fonctionnelle selon l'une des revendications 11 à 14, caractérisée en ce que le micro-contrôleur est programmé pour :
- mettre en mémoire d'une position estimée (Xo) de l'organe déplaçable à l'issue de chaque activation de l'actionneur d'après un ordre reçu ;
- interpréter l'ordre de déplacement sous la forme d'une consigne (Xp) de position de l'organe déplaçable ;
- calculer le pourcentage (X) qu'il faut appliquer à la course totale pour passer de la position estimée (Xo) à la position (Xp) correspondant à la consigne ;
- activation de l'actionneur pendant une durée de manoeuvre calculée par application dudit pourcentage (X) à la durée totale (D1, D2) mise en mémoire.

16. Unité fonctionnelle selon la revendication 15, caractérisée en ce que le micro-contrôleur est programmé pour qu'après un certain nombre de manoeuvres, un ordre de déplacement sous forme de consigne (Xp) de position soit suivi par les étapes suivantes :
- commander un mouvement de l'organe déplaçable jusqu'à une position extrême de réinitialisation, choisie parmi les deux positions extrêmes ;
- commander l'activation de l'actionneur pendant une durée de manoeuvre correspondant à la durée totale (D1, D2) mise en mémoire, à laquelle on applique le pourcentage (X) correspondant au déplacement partiel entre ladite position extrême de réinitialisation et la position de consigne (Xp) ; et
- mettre en mémoire la position de consigne (Xp) en tant que position estimée (Xo).

17. Unité fonctionnelle selon l'une des revendications 11 à 14, caractérisée en ce que le micro-contrôleur est programmé pour :
- interpréter l'ordre en tant que consigne de position (Xp) ; et
- commander l'activation de l'actionneur pour ramener l'organe mobile à une position extrême, puis dans l'autre sens pendant une durée de manoeuvre correspondant à la durée totale (D1, D2) mise en mémoire, à laquelle on applique le pourcentage correspondant au déplacement partiel entre ladite position extrême et la position de consigne.

18. Installation comprenant en combinaison une unité fonctionnelle selon l'une des revendications 11 à 17, une unité de commande permettant d'élaborer des ordres quantifiés, et des moyens (4) de liaison entre l'unité fonctionnelle (5) et l'unité de commande.

19. Installation selon la revendication 18, caractérisée en ce que les moyens de liaison comprennent un espace de communication bidirectionnelle.

## Patentansprüche

1. Verfahren zur Steuerung eines mobilen Teils in einer Betriebseinrichtung zwischen zwei Wegenden mittels eines Betätigungselements, bestehend in den folgenden Etappen:
- Erstellung (13, 15) eines Verschiebebefehls;
- Aktivierung des Betätigungselements während einer Betriebsdauer, die nach dem erhaltenen Befehl berechnet wird;
gekennzeichnet durch die nachfolgenden Etappen, die vor der Befehlserstellung durchgeführt werden:
- Aktivierung (37) des Betätigungselements zur Verschiebung des mobilen Teils von einem Wegende zum anderen;
- Messung der Gesamtdauer (D1, D2) der Verschiebung zwischen dei Wegenden;
- Aufzeichnung (41) dieser Gesamtdauer in einem energieunabhängigen Speicher (23);
und dadurch gekennzeichnet, daß die Berechnung dieser Betriebsdauer diese Gesamtdauer berücksichtigt.

2. Verfahren nach Anspruch 1, dadurch gekennzeichnet, daß für die Messung der Gesamtverschiebedauer (D1, D2) das Ende der Verschiebung nach der Änderung eines Betriebsparameters des Betätigungselements erfaßt wird.

3. Verfahren nach Anspruch 1, dadurch. gekennzeichnet, daß für die Messung der Gesamtverschiebedauer (D1, D2) das Verschiebeende mittels einer Positionserfassung erfaßt wird.

4. Verfahren nach Anspruch 1, dadurch gekennzeichnet, daß als Verschiebedauer die Dauer zwischen einer manuellen Betätigung zur Inbetriebsetzung des Betätigungselements und einer manuellen Betätigung zur Auβerbetriebsetzung des Betätigungselements angesehen wird.

5. Verfahren nach Anspruch 1, dadurch gekennzeichnet, daß nach einer gewissen Anzahl (No) von Aktivierungen des Betätigungselements nach Verschiebebefehlen eine neuerliche Messung der Gesamtdauer (D1, D2) und die Aufzeichnung dieser Gesamtdauer anstelle der vorher aufgezeichneten Gesamtdauer zum Zwecke der Aktualisierung durchgeführt werden.

6. Verfahren nach einem der Ansprüche 1 bis 5, dadurch gekennzeichnet, daß der Befehl für eine Teilbetätigung ausgehend von einer Position des mobilen Teils, wie sie sich aus den vorhergehenden Verschiebungen ergibt, bezeichnend ist.

7. Verfahren nach einem der Ansprüche 1 bis 5, gekennzeichnet durch die folgenden Etappen:
- Speicherung einer angenommenen Position (Xo) des mobilen Teils zu Beginn jeder Aktivierung des Betätigungselements nach einem Befehlserhalt;
- Erstellung des verschiebebefehls in Form eines Positionssollwertes (Xp) des mobilen Teils;
- Berechnung des Prozentsatzes (X), der auf den Gesamtweg anzuwenden ist, um von der angenommenen Position (Xo) in die dem Sollwert entsprechende Position (Xp) überzugehen;
- Aktivierung des Betätigungselements während einer betriebsdauer, die durch Anwendung dieses Prozentsatzes (x) auf die gespeicherte Gesamtdauer (D1, D2) berechnet wird.

8. Verfahren nach Anspruch 7, dadurch gekenzeichnet, daß nach einer gewissen Anzahl von Betriebsabläufen auf einen verschiebebefehl in Form eines Positionssollwertes (Xp) die folgenden Etappen folgen:
- Bewegung des mobilen Teils bis zu einer äußersten Position der Reinitialisierung, die unter den beiden äußersten Position gewählt wird;
- Aktivierung des Bethtigungselements während einer Betriebsdauer, die der gespeicherten Gesamtdauer (D1, D2) entspricht, auf die der Prozentsatz (X) angewandt wird, der der teilweisen Verschiebung zwischen dieser äußersten Position der Reinitialisierung und der sollposition (Xp) entspricht; und
- Speicherung der Sollposition (Xp) als angenommene Position (Xo).

9. Verfahren nach einem der Ansprüche 1 bis 5, gekennzeichnet durch die nachfolgenden Etappen:
- Erstellung des Befehls in Form eines Positions-sollwertes (Xp); und
- Aktivierung des Betätigungselements, um den mobilen Teil in eine äußerste Position zurückzubringen, sodann in die andere Richtung während einer Betriebsdaucr, die der gespeicherten Gesamtdauer (D1, D2) entspricht, auf die der Prozentsatz angewandt wird, der der teilweisen Verschiebung zwischen dieser äußersten Position und der Sollposition entspricht.

10. verfahren nach einem der Ansprüche 7 bis 9, dadurch gekennzeichnet, daß die Bedienperson zwischen der Erstellung eines Befehls in Form eines Positionssollwertes (Xp) und der Erstellung eines Befehls zur teilweisen Betätigung, ausgedrückt in Prozent (X) oder dergleichen ausgehend von der Position des mobilen Teils, wie sie sich aus den vorhergehenden Verschiebungen ergibt, wählt, und daß der Befehl zur teilweisen Betätigung zu einer Aktivierung während einer teilweisen Zeitdauer (D) führt, die durch Anwendung dieses Prozentsatzes oder dergleichen (X) auf die gespeicherte Gesamtdauer (D1, D2) berechnet wurde.

11. Betriebseinrichtung (5), bestehend aus einem zwischen zwei Wegenden mobilen Teil, einem mit dem mobilen Teil verbundenen Betätigungselement und einem Mikrokontroller (18), der mit einem energieunabhängigen Speicher (23) und einer zaitschaltuhr verbunden und derart programmiert ist, daß er einen Betriebsbefehl in Form von Aktivierungsdauer des Betätigungselements auslegen und die Aktivierung des Betätigungselements während dieser Betriebsdauer steuern kann, dadurch gekennzeichnet, daß der Mikrokontroller derart programmiert ist, daß er während einer Initialisierungsetappe eine tatsächliche Verschiebetätigkeit des mobilen Teils von einem Wegende zum anderen berücksichtigen kann, um die Gesamtdauer (D1, D2) der Verschiebung zwischen den Wegenden zu messen und in dem engergieunabhängigen speicher (23) aufzuzeichnen, und sodann nach Erhalt eines Betriebsbefehls diese Betriebsdauer unter Berücksichtigung der Gesamtdauer zu bestimmen.

12. Betriebseinrichtung nach Anspruch 11, dadurch gekennzeichnet, daß sie Mittel zur Erfassung des Verschiebeendes des mobilen Teils nach Änderung eines Betriebsparameters des Betätigungselements im Rahmen der Messung der Gesamtdauer (D1, D2) umfaßt.

13. Betriebseinrichtung nach Anspruch 11, dadurch gekennzeichnet, daß sie Mittel zur Erfassung der Positionierung umfaßt, um das Verschiebeende des mobilen Teils im Rahmen der Messung der Gesamtdauer (D1, D2) zu erfassen.

14. Betriebseinrichtung nach Anspruch 11, dadurch gekennzeichnet, daß der Mikrokontroller derart programmiert ist, daß er als Gesamtdauer (D1, D2) die Zeit mißt, die zwischen einer manuellen Betätigung zur Inbetriebsetzung und einer manuellen Betätigung zur Außerbetriebsetzung des Betätigungselements vergangen ist.

15. Betriebseinrichtung nach einem der Ansprüche 11 bis 14, dadurch gekennzeichnet, daß der Mikrokontroller derart programmiert ist, um:
- eine angenommene Position (Xo) des mobilen Teils zu Beginn jeder Aktivierung des Betätigungselements nach cinem Befehlserhalt zu speichern;
- den Verschiebebefehl in Form eines Sollwertes (Xp) für die Position des mobilen Teils auszulegen;
- den Prozentsatz (X) zu berechnen, der auf den Gesamtweg anzuwenden ist, um von der angenommenen Position (Xo) zu der Position (Xp) überzugehen, die dem Sollwert entspricht;
- das Betätigungselement während einer Betriebsdauer zu aktivieren, die durch Anwendung dieses Prozentsatzes (X) auf die gespeicherte Gesamtdauer (D1, D2) berechnet wurde.

16. Betriebseinrichtung nach Anspruch 15, dadurch gekennzeichnet, daß der Mikrokontroller derart programmiert ist, daß nach einer gewissen Anzahl von Betriebsabläufen auf einen Verschiebebefehl in Form eines Positionssollwertes (Xp) die folgenden Etappen folgen:
- Steuerung einer Bewegung des mobilen Teils bis in eine äußerste Position der Reinitialisierung, die unter den beiden äußersten Positionen gewählt wird;
- Steuerung der Aktivierung des Betätigungselements während einer Betriebsdauer, die der gespeicherten Gesamtdauer (D1, D2) entspricht, auf die der Prozentsatz (X) angewandt wird, der der Teilverschiebung zwischen dieser äußersten Position der Reinitialisierung und der sollposition (Xp) entspricht; und
- Speicherung der Sollposition (Xp) als angenommene Position (Xo).

17. Betriebseinrichtung nach einem der Ansprüche 11 bis 14, dadurch gekennzeichnet, daß der Mikrokontroller derart programmiert ist, daß:
- der Befehl als PositionssollwerL (Xp) ausgelegt wird; und
- die Aktivierung des Betätigungselements gesteuert wird, so daß der mobile Teil in eine äußerste Position gebracht wird, sodann in die andere Richtung während einer Betriebsdauer, die der gespeicherten Gesamtdauer (D1, D2) entspricht, auf die der Prozentsatz angewandt wird, der der Teilverschiebung zwischen der äußersten Position und der Sollposition entspricht.

18. Einrichtung, die in Kombination eine Retriebseinrichtung nach einem der Ansprüche 11 bis 17, eine Steuereinrichtung für die Erstellung von quantifizierten Befehlen und Mittel (4) zur Verbindung zwischen der Betriebseinrichtung (5) und der Steuereinrichtung umfaßt.

19. Einrichtung nach Anspruch 18, dadurch gekennzeichnet, daß die Verbindungsmittel einen bidirektionalen Verbindungsraum umfassen.

## Claims

1. Method of controlling, in a functional unit, a part which can be moved between two ends of travel by means of an actuator, comprising the following steps:
- generation (13, 15) of a displacement command;
- activation of the actuator over an operating duration calculated according to the received command;
characterized by the following steps, prior to the generation of the command;
- activation (37) of the actuator in order to displace the moving part from one end of travel to the other;
- measurement of the total duration (D1, D2) of displacement between ends of travel;
- recording (41) of this total duration in a non-volatile memory (23);
and in that the calculation of the said operating duration takes account of the said total duration.

2. Method according to Claim 1, characterized in that in order to measure the total duration of displacement (D1, D2), the end of the displacement is detected from the variation in an operational parameter of the actuator.

3. Method according to Claim 1, characterized in that in order to measure the total duration of displacement (D1, D2), the end of displacement is detected by means of a position detector.

4. Method according to Claim 1, characterized in that the duration of displacement is taken to be the time between a manual action of starting the actuator and a manual action of stopping the actuator.

5. Method according to Claim 1, characterized in that, after a certain number (No) of activations of the actuator in accordance with displacement commands, the total duration (D1, D2) is measured again and this total duration is recorded in replacement of the previously recorded total duration, for the purpose of updating.

6. Method according to one of Claims 1 to 5, characterized in that the command indicates a partial actuation starting from a position of the movable part which is the result of previous displacements.

7. Method according to one of Claims 1 to 5, characterized by the following steps:
- placing in memory of an estimated position (Xo) of the movable part after each activation of the actuator in accordance with a received command;
- generation of the displacement command in the form of a position instruction (Xp) for the movable part;
- calculation of the percentage (X) which must be applied to the total travel in order to move from the estimated position (Xo) to the position (Xp) corresponding to the instruction;
- activation of the actuator for an operating duration calculated by application of the said percentage (X) to the total duration (D1, D2) placed in memory.

8. Method according to Claim 7, characterized in that, after a certain number of operations, a displacement command in the form of a position instruction (Xp) is followed by the following steps:
- movement of the movable part up to an extreme reinitialisation position, chosen from among the two extreme positions;
- activation of the actuator for an operating duration corresponding to the total duration (D1, D2) placed in memory, to which is applied the percentage (X) corresponding to the partial displacement between the said extreme reinitialisation position and the instruction position (Xp); and
- placing in memory of the instruction position (Xp) as an estimated position (Xo).

9. Method according to one of Claims 1 to 5, characterized by the following steps:
- generation of the command in the form of a position instruction (Xp); and
- activation of the actuator in order to move the movable part into an extreme position, then in the other direction over an operating period corresponding to the total duration (D1, D2) placed in memory, to which is applied the percentage corresponding to the partial displacement between the said extreme position and the instruction position.

10. Method according to one of Claims 7 to 9, characterized in that the operator chooses between the generation of a command in the form of a position instruction (Xp) and the generation of a partial actuation command expressed as a percentage (X) or similar starting from the position of the movable part which results from the previous displacements, and in that the partial actuation command results in an activation for a partial duration (D) calculated by application of the said percentage or similar (X) to the total duration (D1, D2) placed in memory.

11. Functional unit (5) comprising a part which is movable between two ends of travel, an actuator connected to the movable part, and a micro-controller (18) connected to a non-volatile memory (23) and to a clock, and programmed to interpret an operating command in terms of duration of activation of the actuator and to control the activation of the actuator during the said operating duration, characterized in that the micro-controller is programmed, during an initialisation stage, to take into account a real operation of displacement of the moving part from one end of its travel to the other in order to measure and record in the non-volatile memory (23) the total duration (D1, D2) of displacement between the ends of travel and then, when an operating command is received, to determine the said operating duration taking account of the said total duration.

12. Functional unit according to Claim 11, characterized in that it comprises means of detecting the end of the displacement of the movable part from the variation of an operational parameter of the actuator, as part of the process of measuring the said total duration (D1, D2).

13. Functional unit according to Claim 11, characterized in that it comprises position detecting means for detecting the end of the displacement of the movable part, as part of the process of measuring the said total duration (D1, D2).

14. Functional unit according to Claim 11, characterized in that the micro-controller is programmed to measure, as being the total duration (D1, D2), the elapsed time between a manual action to start the actuator and a manual action to stop the actuator.

15. Functional unit according to one of Claims 11 to 14, characterized in that the micro-controller is programmed to:
- place in memory an estimated position (Xo) of the movable part after each activation of the actuator in accordance with a received command;
- interpret the displacement command in the form of a position instruction (Xp) for the movable part;
- calculate the percentage (X) which must be applied to the total travel in order to move from the estimated position (Xo) to the position (Xp) corresponding to the instruction;
- activate the actuator for an operating duration calculated by application of the said percentage (X) to the total duration (D1, D2) placed in memory.

16. Functional unit according to Claim 15, characterized in that the micro-controller is programmed so that, after a certain number of operations, a displacement command in the form of a position instruction (Xp) is followed by the following steps:
- commanding a movement of the movable part up to an extreme reinitialisation position, chosen from among the two extreme positions;
- commanding the activation of the actuator for an operating duration corresponding to the total duration (D1, D2) placed in memory, to which is applied the percentage (X) corresponding to the partial displacement between the said extreme reinitialisation position and the instruction position (Xp); and
- placing in memory of the instruction position (Xp) as an estimated position (Xo).

17. Functional unit according to one of Claims 11 to 14, characterized in that the micro-controller is programmed to:
- interpret the command as a position instruction (Xp); and
- command the activation of the actuator in order to move the movable unit to an extreme position, and then in the other direction for an operating duration corresponding to the total duration (D1, D2) placed in memory, to which is applied the percentage corresponding to the partial displacement between the said extreme position and the instruction position.

18. Installation comprising, in combination, a functional unit according to one of Claims 11 to 17, a control unit making it possible to generate quantified commands, and means (4) of connection between the functional unit (5) and the control unit.

19. Installation according to Claim 18, characterized in that the means of connection comprise a bidirectional communications medium.
